# EUROPÄISCHE PATENTSCHRIFT

(11) **EP 0 714 020 B1**
(45) Veröffentlichungstag und Bekanntmachung des Hinweises auf die Patenterteilung: **29.04.1998**
(21) Anmeldenummer: 95250287.0
(22) Anmeldetag: 22.11.1995
(51) Int. Cl.: G01N 1/22

(54) **Vorrichtung zur Probenahme flüchtiger Stoffe mit einem Diffusionskörper und einem Mittel zur Adsorption zu erfasssender flüchtiger Stoffe**
Device for sampling volatile materials using a diffusion body and an absorber for the material to be sampled
Echantillonneur de substances volatiles, comprenant un corps de diffusion et une absorbante

(30) Priorität: 25.11.1994 IT PD940208
(43) Veröffentlichungstag der Anmeldung: 29.05.1996
(73) Patentinhaber: Fondazione Salvatore Maugeri, 27100 Pavia (IT)
(72) Erfinder: Cocheo, Vincenzo Dr.,, I-35125 Padova (IT)
(74) Vertreter: Wablat, Wolfgang, Dr.Dr.

(56) Entgegenhaltungen:
- WO-A-91/03719
- DE-C- 3 712 924
- GB-A- 2 064 765
- US-A- 4 350 502
- US-A- 4 786 501
- JOURNAL OF VACUUM SCIENCE AND TECHNOLOGY: PART A, Bd. 6, Nr. 3, PART I, Mai 1988, Seiten 1259-1262, XP000006899 SHMAYDA W T ET AL: "TRITIUM REMOVAL FROM NOBLE GAS STREAMS"

## Beschreibung

Die vorliegende Erfindung betrifft eine Vorrichtung zur Probenahme flüchtiger Stoffe, insbesondere einen Diffusionsprobenehmer mit einem Diffusionskörper und einem Mittel zur Adsorption zu erfassender flüchtiger Stoffe.

Das Hauptanwendungsgebiet der erfindungsgemäßen Vorrichtung ist die Überwachung der Umweltverschmutzung, insbesondere der Luftverunreinigung.

Im Handel erhältliche Diffusionsprobenehmer zur Erfassung flüchtiger Stoffe sind allgemein dadurch gekennzeichnet, daß die zu erfassenden Stoffe darin einen axial verlaufenden Diffusionsweg zurücklegen. Die Diffusion erfolgt dabei über eine flache Diffusionsfläche, deren Größe meist etwa 15 bis 20 cm² beträgt. Die Probefrequenz der bekannten Vorrichtungen liegt bei etwa 30 bis 50 m³/min.

Um die gleiche Menge flüchtiger Stoffe aufzunehmen, welche in 15 bis 30 Minuten durch einen Aktivsammler adsorbiert werden, müssen diese Vorrichtungen für fast 8 Stunden der Umgebungsluft ausgesetzt werden.

Obwohl die sogenannte thermische Desorption das Verfahren zur Rückgewinnung adsorbierter flüchtiger Stoffe ist, welches aufgrund der axialen Diffusionsgeometrie eine höhere Rückgewinnungsrate sicherstellt, wird bei den herkömmlichen Diffusionsprobenehmern ausschließlich die Lösungsmitteldesorption als Rückgewinnungsverfahren angewandt.

In US-A-4 786 501 werden verbesserte Einsätze (Einpflanzelemente) zu einer kontrollierten und kontinuierlichen Verabreichung von Wachstumshormonen für Rinder und Schweine beschrieben. Diese Einsätze sind aus einer zusammengepreßten Stoffzusammensetzung hergestellt, die einen wachstumsfördernden Anteil eines rekombinant hergestellten Wachstumshormons für Tiere enthält und in einem an den Enden verschlossenen Rohrelement aus porösem Polyethylen untergebracht. Nach dem Einpflanzen dieses Einsatzes unter die Haut des Rindes dient der poröse Zylindermantel zur Verlangsamung der Diffusionsgeschwindigkeit des Wachstumshormons in den tierischen Körper.

Eine Entnahme und Speicherung von Proben aus gasförmigen Stoffen wird von US-A-4 786 501 jedoch weder beschrieben noch nahegelegt.

In US-A-4 350 502 und WO-A-91/03 719 werden weiterhin Adsorptionsmittel enthaltende Vorrichtungen, jedoch keine durch eine poröse Wand gebildeten Diffusionskörper beschrieben.

US-A-4 350 502 beschreibt die Reinigung - beispielsweise aus einer Mülldeponie austretender - kontaminierter Gase. Dabei gelangt das durch ein Drahtnetzrohr in axialer Richtung strömende kontaminierte Gas auch radial durch die Netzmaschen in den mit einem Adsorptionsmittel gefüllten Ringraum, der sich zwischen der Außenseite des Drahtnetzrohres und der Innenwand eines das Adsorptionsmittel umhüllenden dichten Gehäuses befindet. Das (teilweise) gereinigte Gas tritt an der oberen offenen Stirnseite in die Atmosphäre aus.

US-A-4 350 502 enthält jedoch keinen Hinweis darauf, eine Probenahme durch radiale Diffusion über einen porösen zylindrischen Diffusionskörper von außen nach innen, und zwar zu einem in dem Diffusionskörper konzentrisch angeordneten Adsorptionsmittel strömen zu lassen.

In WO-A-91/03 719 wird eine Probenahmevorrichtung beschrieben, bei der ein Gasstrom - zum Beispiel ausgeblasene Atemluft - in axialer Richtung in ein an beiden Enden offenes Tragrohr mit geschlossener Außenwand eingebracht wird. Innerhalb des Tragrohrs ist konzentrisch ein in einer Hülse mit einer Vielzahl kleiner Öffnungen untergebrachtes Adsorptionsmittel gehalten. Die Halterung der rohrartigen Hülse erfolgt in Querschottwänden, die mit einer Eintrittsöffnung und einer Austrittsöffnung, die sich diametral gegenüberliegen, versehen sind. Darüber hinaus ist das Tragrohr durch Längsschottwände in zwei Längshälften geteilt. Das für die Probenahme bestimmte Gas strömt in die eine Längshälfte des Tragrohrs ein, fließt in Querrichtung durch das Adsorptionsmittel und gelangt schließlich aus der anderen Längshälfte des Tragrohres über eine Öffnung nach außen. Das zunächst axial einströmende Probenahmegas wird zwangsweise senkrecht zur Axialrichtung - d.h. quer - durch das Adsorptionsmittel gedrückt und strömt anschließend in axialer Richtung weiter. Die Querströmung wird durch in Teilbereichen am Adsorptionsmittel bzw. dessen siebartiger Hülse anliegende schalenartige Erweiterungen in einem begrenzten Bereich zwangsweise durch das Adsorptionsmittel hindurch geführt.

Eine Anwendung der in WO-A-91/03 719 beschriebenen Probenahmevorrichtung in "ruhender" Luft ist nicht vorgesehen. Auch wird kein Diffusionskörper mit einer porösen Wand beschrieben oder nahegelegt.

Der vorliegenden Erfindung liegt die Aufgabe zugrunde, eine Vorrichtung der eingangs genannten Art so zu verbessern, daß deren analytische Erfassungsgrenzen verringert und die erzielbare Probefrequenz erheblich erhöht wird. Diese Aufgabe wird erfindungsgemäß dadurch gelöst, daß das Adsorptionsmittel innerhalb des Diffusionskörpers derart angeordnet ist, daß die Diffusionsstrecke der zu erfassenden flüchtigen Stoffe radialsymmetrisch ausgebildet ist. Hierdurch wird die Diffusionsstrecke erheblich verkürzt. Gleichzeitig werden außerordentlich geringe analytische Erfassungsgrenzen erzielt.

Die erfindungsgemäße Lösung ermöglicht den Bau von Diffusionsprobenehmern mit vergleichsweise kleinen Abmessungen, wobei die Diffusionsfläche jedoch 2- bis 3-mal größer ist als diejenige der derzeit im Handel erhältlichen Probenehmer, deren Abmessungen zudem relativ groß sind. Darüber hinaus führt die erfindungsgemäße Lösung zu einer Vergrößerung des Oberflächen-Diffusionsweg-Verhältnisses, und zwar bis zu einem Maß wie es das Ficksche Gesetz erlaubt. Auf diese Weise läßt sich eine Probefrequenz von 80 bis 100 cm²/min erzielen, die somit in der Größenordnung von Aktiv-Probenehmern liegt.

Eine vorteilhafte Ausgestaltung der erfindungsgemäßen Vorrichtung ist dadurch gekennzeichnet, daß der Diffusionskörper zylinderförmig ausgebildet ist, das Adsorptionsmittel konzentrisch innerhalb des Diffusionskörpers angeordnet ist, und daß das Adsorptionsmittel mit einem rostfreiem Drahtnetz ummantelt ist.

Hierdurch wird eine Rückgewinnung (Freigabe) der gesammelten Analyseproben sowohl im Wege der thermischen Desorption als auch im Wege der Lösungsmittel-Desorption ermöglicht.

Der erfindungsgemäße Probenehmer ist einschließlich des Diffusionskörpers vorzugsweise aus hochdichtem Polyethylen gefertigt. Dies stellt sicher, daß die Vorrichtung chemisch inert, robust und wasserundurchlässig ist.

Als Adsorptionsmittel kann entsprechend den verschiedenen aufzunehmenden Analysen beispielsweise Aktivkohle, poröses Polymersilicagel (Polymerkieselgel) oder beschichtetes Silicagel verwendet werden. Eine entsprechend befüllte Adsorptionspatrone ist auch für eine Aktiv-Probenahme geeignet, und zwar sowohl für eine thermische Desorption als auch für eine Rückgewinnung der adsorbierten Verbindungen durch Lösungsmittel.

Weitere Merkmale und Vorteile des Gegenstandes der Erfindung ergeben sich aus den Unteransprüchen und der nachfolgenden Beschreibung.

Im folgenden wird die Erfindung anhand eines Ausführungsbeispiels mit Bezug auf die beiliegende Zeichnung näher erläutert.

Es zeigen:
- Figur 1: einen Längsschnitt durch einen zylinderförmigen Diffusionskörper, dessen Enden mit Kappen versehen sind;
- Figur 2: eine schematisch dargestellte, in den Diffusionskörper gemäß Figur 1 einsetzbare Adsorptionspatrone;
- Figur 3: einen Längsschnitt durch eine zusammengesetzte erfindungsgemäße Vorrichtung mit einem Anschlußelement;
- Figur 4: einen Längsschnitt durch die zusammengesetzte erfindungsgemäße Vorrichtung mit einer Stützplatte; und
- Figur 5: eine Seitenansicht der Stützplatte gemäß Figur 4.

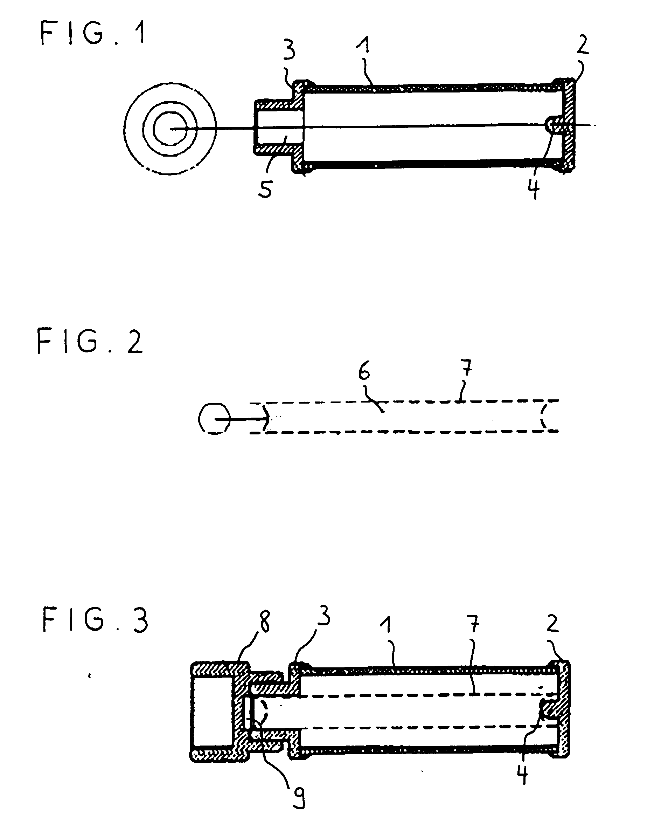

Der in Figur 1 schematisch dargestellte Diffusionskörper 1 weist eine zylinderförmige Röhre aus porösem Polyethylen auf, an deren Enden Kappen 2 und 3 angeordnet sind. Es ist zu erkennen, daß eine der Kappen (Bodenkappe 2) vollständig verschlossen ist, während die andere Kappe 3 (Kopfkappe) einen Durchlaß 5 aufweist.

Die in Figur 2 schematisch dargestellte Adsorptionspatrone umfaßt eine Röhre 7, die aus einem verschweißten, rostfreien Stahldrahtgitter gefertigt ist und ein geeignetes Adsorptionsmaterial beinhaltet. Das Adsorptionsmaterial kann entsprechend den erforderlichen Analysen ausgewählt werden. Für eine Massenspektrometrie-Analyse kann z. B. TENAX® oder zur Analyse von Aldehyden z. B. mit 2,4-Denitrophenylhydrazin beschichtetes Silicagel verwendet werden.

Figur 3 zeigt die erfindungsgemäße Vorrichtung im zusammengesetzten Zustand. Die Adsorptionspatrone 7 wird durch einen an der Bodenkappe 2 ausgebildeten Vorsprung 4 zentriert und durch ein mit einer Ausnehmung 9 versehenes Anschlußelement festgelegt. Das Anschlußelement 8 ist auf die Kopfkappe 3 des Diffusionskörpers 1 aufschraubbar oder in anderer geeigneter Weise hiermit lösbar verbunden. Der in der Kopfkappe 3 ausgebildete Durchlaß weist einen Innendurchmesser auf, der geringfügig größer ist als der Außendurchmesser der Adsorptionspatrone 7.

Durch die konzentrische Anordnung der röhrenförmigen Adsorptionspatrone 7 innerhalb des zylinderförmigen Diffusionskörpers 1 ergibt sich für die zu erfassenden flüchtigen Stoffe eine radialsymmetrische Diffusionsstrecke. Die Diffusionsstrecke ist gegenüber herkömmlichen Vorrichtungen somit wesentlich verkürzt. Darüber hinaus ergibt sich ein optimales Oberflächen-Diffusionsweg-Verhältnis.

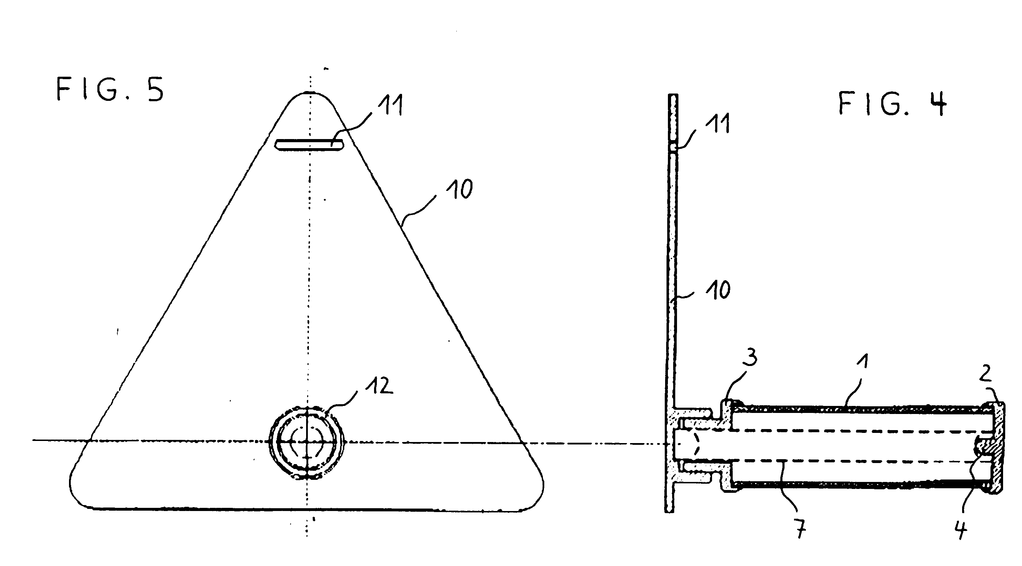

Anstelle des in Figur 3 dargestellten Anschlußelements 8 kann der erfindungsgemäße Probenehmer auch an einer Stützplatte 10 befestigt sein, mittels der der Probenehmer an einem Haken oder dergleichen aufgehängt werden kann (vgl. Figuren 4 und 5). Die Stützplatte 10, die vorzugsweise dreieckig und aus Polyethylen gefertigt ist, kann einer Person umgehängt werden, oder als beliebiger ortsfester oder mobiler Gegenstand ausgebildet sein.

Das Gesamtgewicht des erfindungsgemäßen Probenehmers beträgt 4 g bzw. in Verbindung mit der Stützplatte 9 g. Die Gestalt und die Konstruktionsmaterialien der erfindungsgemäßen Vorrichtung ermöglichen deren Einsatz selbst bei schlechtem Wetter.

Die Form und die Konstruktionsmaterialien der Adsorptionspatrone 7 ermöglichen darüber hinaus deren Einsatz als Aktiv-Probenehmer. Hierzu genügt es, die Adsorptionspatrone in eine Glas- oder Stahlröhre einzuführen, und zwar ohne den Diffusionskörper 1. In diesem Fall ist es selbstverständlich erforderlich, eine Probenpumpe zum Ansaugen der mit flüchtigen Stoffen befrachteten Luft zu verwenden.

Der erfindungsgemäße Diffusionsprobenehmer ermöglicht nach einer Expositionszeit von 8 Stunden und unter Anwendung der Karbonssulfid einsetzenden Rückgewinnungstechnik einen Nachweis von Benzol bis zu einem Wert von 10 µg/m³ bzw. 3 µg/m³ bei einer Expositionszeit von 24 Stunden.

Die Erfindung, wie in den Ansprüchen dargestelle, beschränkt sich in ihrer Ausführung nicht auf das vorstehend angegebene Ausführungsbeispiel. Vielmehr sind Varianten möglich, die von der dargestellten Lösung auch bei grundsätzlich anders gearteten Ausführungen Gebrauch machen.

### Bezugszeichenliste

- 1: Diffusionskörper
- 2: Bodenkappe des Diffusionskörpers
- 3: Kopfkappe des Diffusionskörpers
- 4: Vorsprung
- 5: Durchlaß
- 6: Adsorptionsmittel
- 7: Röhre aus elektroverschweißtem, rostfreiem Stahldrahtgitter
- 8: Anschlußelement
- 9: Ausnehmung
- 10: Stützplatte
- 11: Langloch (Befestigungsloch)
- 12: Befestigungsbuchse

## Patentansprüche

1. Vorrichtung zur Probenahme flüchtiger Stoffe, mit einem Diffusionskörper und einem Mittel zur Adsorption der zu erfassenden flüchtigen Stoffe, **gekennzeichnet durch** eine radialsymmetrische Diffusionsstrecke der zu adsorbierenden flüchtigen Stoffe, indem das Adsorptionsmittel (6) konzentrisch innerhalb eines als Hohlzylinder mit poröser Mantelfläche ausgebildeten Diffusionskörpers (1) angeordnet ist.

2. Vorrichtung nach Anspruch 1, **dadurch gekennzeichnet**, daß das Adsorptionsmittel als eine Adsorptionsmittelpatrone (6) ausgebildet ist, in der das Adsorptionsmittel mit einem röhrenförmigen Drahtgitter (7) ummantelt ist.

3. Vorrichtung nach Anspruch 2, **dadurch gekennzeichnet**, daß das Drahtgitter (7) ein Drahtnetz aus rostfreiem Material ist.

4. Vorrichtung nach einen der Ansprüche 1 bis 3, **dadurch gekennzeichnet**, daß der Diffusionskörper (1) eine Bodenkappe (2) mit einem nach innen gerichteten Vorsprung (4) und eine Kopfkappe (3) mit einem Durchlaß (5) zur Halterung bzw. Einführung der Adsorptionsmittelpatrone (6) aufweist, wobei die Kopfkappe (3) in der Ausnehmung (9) eines napfartigen Anschlußelements (8) bzw. einer Befestigungsbuchse (12) lösbar angebracht ist.

5. Vorrichtung nach einem der Ansprüche 1 bis 4, **dadurch gekennzeichnet**, daß der Diffusionskörper (1) aus einem Polymer besteht.

## Claims

1. An apparatus for taking samples from volatile substances with a diffusion vessel and an agent for adsorbing the volatile substances to be detected, **characterized in that** the volatile substances to be adsorbed take a radially symmetrical diffusion path as the adsorbing agent (6) is arranged concentrically in a diffusion vessel (1) comprising a cylindrical hollow body with a porous shell surface.

2. Apparatus according to claim 1, **characterized in that** the adsorbing agent is designed as an adsorbing agent cartridge (6) in which the adsorbing agent is encased in a tube-shaped wire grating (7).

3. Apparatus according to claim 2, **characterized in that** said wire grating (7) is a wire mesh made of a stainless material.

4. Apparatus according to any one of claims 1 to 3, **characterized in that** the diffusion vessel (1) comprises a bottom cap (2) with a projection to the inside (4) and a top cap (3) with a passage (5) for fixing or inserting the adsorbing agent cartridge (6), and where said top cap (3) is detachably mounted into the recess (9) of a cup-shaped connecting element (8) or a fixing bush (12).

5. Apparatus according to any one of claims 1 to 4, **characterized in that** the diffusion vessel (1) consists of a polymer.

## Revendications

1. Dispositif pour prélever des échantillons de matières volatiles, comprenant un corps de diffusion et un agent pour l'adsorption des matières volatiles à détecter, caractérisé par un trajet de diffusion symétrique radialement des matières volatiles à adsorber, de façon à ce que l'agent d'adsorption (6) est agencé concentriquement à l'intérieur d'un corps de diffusion (1) réalisé sous la forme d'un cylindre creux présentant une surface d'enveloppe poreuse.

2. Dispositif selon la revendication 1, caractérisé en ce que l'agent d'adsorption est réalisé sous forme d'une cartouche d'agent d'adsorption (6) dans laquelle l'agent d'adsorption est enveloppé d'une grille (7) en fil métallique de forme tubulaire.

3. Dispositif selon la revendication 2, caractérisé en ce que la grille (7) en fil métallique est réalisée en un matériau inoxydable.

4. Dispositif selon l'une quelconque des revendications 1 à 3, caractérisé en ce que le corps de diffusion (1) présente un capuchon de fond (2) avec une saillie (4) dirigée vers l'intérieur, et un capuchon de tête (3) dans lequel est ménagé un passage (5) pour le maintien ou l'introduction de la cartouche (6) d'agent d'adsorption, le capuchon de tête (3) étant agencé de façon amovible dans un évidement (9) d'un élément de raccordement (8) en forme de godet.

5. Dispositif selon l'une quelconque des revendications 1 à 4, caractérisé en ce que le corps de diffusion (1) est réalisé en un polymère.
